# EUROPEAN PATENT SPECIFICATION

(11) **EP 2 800 264 B1**
(45) Date of publication and mention of the grant of the patent: **13.06.2018**
(21) Application number: 12863198.3
(22) Date of filing: 05.11.2012
(51) Int. Cl.: H02M 7/12

(54) **POWER CONVERSION DEVICE**
LEISTUNGSWANDLER
DISPOSITIF DE CONVERSION DE PUISSANCE

(30) Priority: 28.12.2011 JP 2011288119
(43) Date of publication of application: 05.11.2014
(73) Proprietor: Daikin Industries, Ltd., Osaka-shi, Osaka 530-8323 (JP)
(72) Inventor: ISHIZEKI, Shinichi, Osaka-shi, Osaka 530-8323 (JP); KAGIMURA, Sumio, Osaka-shi, Osaka 530-8323 (JP); ISHII, Hidehiro, Osaka-shi, Osaka 530-8323 (JP)
(74) Representative: Hoffmann Eitle
(86) International application number: PCT/JP2012/078617
(87) International publication number: WO 2013/099443

(56) References cited:
- WO-A1-2011/089800
- DE-A1- 10 146 868
- JP-A- H0 956 173
- JP-A- H09 289 778
- JP-A- 2007 295 686
- JP-A- 2008 131 741

## Description

### Technical Field

The present invention relates to a power conversion device, in particular, to a power conversion device equipped with a reverse blocking-type switching unit.

### Background Art

Patent Document 1: DE 101 46 868 A1 describes a circuitry to precharge a condenser. The condenser is connected at a DC voltage side of a multiphase current inverter. AC voltage side inputs of the current converter are connected to a feeding net. Per current inverter phase there is provided a switchable consumer conductor switch being electrically connected in series with the phase related current valves. At the control side the semiconductor switch is connected to a phase controllable control.
Patent Document 2: WO 2011/089800 A1 describes a power conversion device. There is provided a power conversion device capable of obtaining the operation voltage of a switching element of a power conversion unit from an operation power source of a switching element of the switch circuit. A power supply unit has one end on the low potential side, which end is connected to a switching element on the power line side, and serves as an operation power source for outputting a switch signal to the switching element. A switching element comprises a first and a second electrode and passes an electric current in only a direction from the second electrode to the first electrode. A diode is connected in parallel to the switching element while the cathode thereof is directed to a power line. A capacitor has one end connected to the first electrode of the switching element and the other end connected to the other end of the power supply unit, and serves as an operation power source for outputting a switch signal to the switching element.
Patent Document 3 describes a three-phase current source converter. The current source converter converts a three-phase AC voltage applied to input lines into a DC voltage and applies the DC voltage to between a pair of DC lines. In detail, the current source converter has a pair of reverse blocking-type switching units for each phase. In each phase, the pair of reverse blocking-type switching units are series-connected to each other between the pair of DC lines, and the connection point of the series connection is connected to the input line. Further, the pair of reverse blocking-type switching units for each phase are parallel-connected to the pairs of reverse blocking-type switching units in the other phases between the DC buses.

These reverse blocking-type switching units are each equipped with a diode and a switching element. The diode and the switching element are series-connected to each other. These diodes are all disposed with the anodes thereof directed to the DC line on the high potential side. With this arrangement, the diodes realize a reverse blocking function as reverse-blocking-type switching units.

### Prior Art Document

### Patent Document

Patent Document 3: Japanese Patent Application Laid-Open No. 2011-15604

### Summary of Invention

### Problems to be Solved by the Invention

With the technique of Patent Document 3, even when a voltage in a reverse direction (that is, a direction reverse to a forward direction of the diode) is applied to the reverse blocking-type switching unit, the reverse voltage is supported by the diode; thus, a reverse voltage applied to the switching element is small.

However, the applicant of the present invention discovered that the following phenomenon is sometimes caused by, for example, a lightning strike, etc. That is to say, even when the reverse voltage applied to the reverse blocking-type switching unit was not large, a large reverse voltage was sometimes applied to the switching element itself. Such a phenomenon will be described in detail later, but this reverse voltage cannot be reduced by the diode for reverse blocking.

To address this issue, an object of the present invention is to provide a power conversion device which can prevent the reverse voltage from being applied to the switching element.

### Means for Solving the Problems

A first aspect of a power conversion device according to the present invention includes: an AC line (Pr, Ps, Pt); first and second DC lines (LL, LH); a first reverse blocking-type switching unit (31-33), the first reverse blocking-type switching unit (31-33) including: a first diode (Dr1, Ds1, Dt1) and a first switching element (Sr1, Ss1, St1) which are series-connected to each other between the AC line and the first DC line, wherein the first diode is disposed with a cathode thereof directed to the first DC line side; a second reverse blocking-type switching unit (34-36), the second reverse blocking-type switching unit (34-36) including: a second diode (Dr2, Ds2, Dt2) and a second switching element (Sr2, Ss2, St2) which are series-connected to each other between the AC line and the second DC line, wherein the second diode is disposed with an anode thereof directed to the second DC line side; and at least one third diode (Dr3, Ds3, Dt3), the at least one third diode (Dr3, Ds3, Dt3) including: an anode on the first DC line side and a cathode on said serial AC line, wherein the at least one third diode is anitparallel-connected to at least any one of the first switching element.

A second aspect of a power conversion device according to the present invention is the power conversion device according to the first aspect, wherein at least one fourth diode (Dr4, Ds4, Dt4), said at least one fourth diode (Dr4, Ds4, Dt4) including an anode on said AC line (Pr, Ps, Pt) and a cathode on said second DC line side, wherein said at least one fourth diode (Dr4, Ds4, Dt4) is antiparallel-connected to at least one of said second switching elements (Sr2, Ss2, St2).

A third aspect of a power conversion device according to the present invention is the power conversion device according to the first or the second aspect, wherein a current capacity of the at least one third and fourth diode (Dr3, Ds3, Dt3, Dr4, Ds4, Dt4) is smaller than a current capacity of the first and second diodes (Dr1, Ds1, Dt1, Dr2, Ds2, Dt2).

### Effects of the Invention

With the first aspect of the power conversion device (3) according to the present invention, even when the reverse voltages are applied to the first reverse-blocking switching unit and the second reverse-blocking switching unit, the first diode and the second diode support major parts of the reverse voltages; thus, the reverse voltages generating on the first and second switching elements are reduced. In addition, according to claim 1, even when the reverse voltage is not applied to the reverse-blocking switching unit, and the reverse voltage is applied to the switching element itself which is parallel-connected to the third diode, the reverse voltage can be reduced by the third diode. Examples of such case include the case that a lightning strike or the like can increase a potential on one end on the first DC line side of the switching element through an operation power supply for the switching element.

With the second aspect of the power conversion device according to the present invention, the large reverse voltages are prevented from being applied to both of the first and second switching elements.

With the third aspect of the power conversion device according to the present invention, it is possible to realize lower component cost and production cost compared to the case of using a diode having a large current capacity.

An object, a feature, an aspect, and an advantage of the present invention will become more apparent by the following detailed description and the accompanying drawings.

### Brief Description of Drawings

[Fig. 1] A diagram showing an example of a schematic configuration of a power conversion device.
[Fig. 2] A diagram showing an example of a schematic configuration of a conventional power conversion device.
[Fig. 3] A diagram showing a voltage applied to a switching element.
[Fig. 4] A diagram showing an example of a schematic configuration of an operation power supply side of a switching element.

### Description of Embodiment

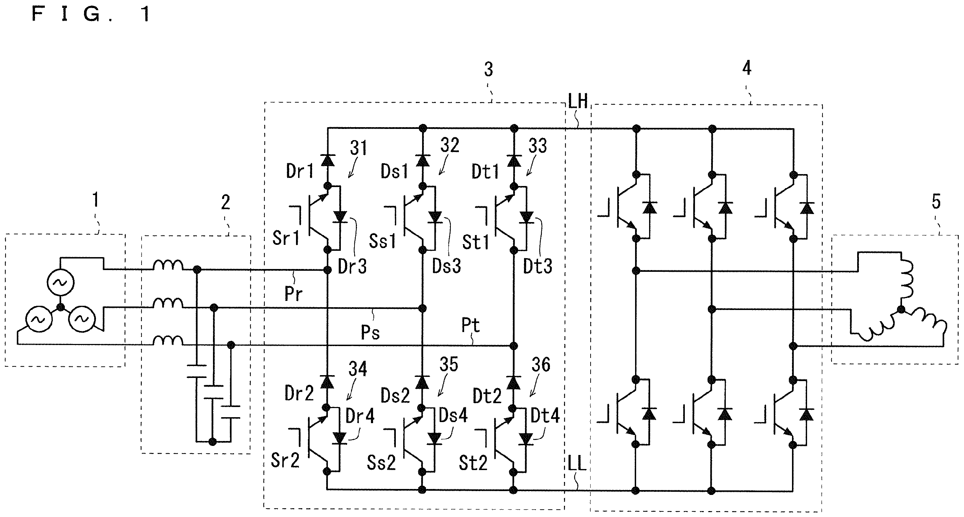

As shown in Fig. 1, AC lines Pr, Ps, and Pt and DC lines LH and LL are connected to a power conversion device (hereinafter, referred to as a "converter") 3. A three-phase AC power supply 1 is connected to the AC lines Pr, Ps, and Pt so as to supply a three-phase AC voltage. Fig. 1 shows, as an example, a three phase converter 3 connected to three AC lines; however, the converter is not limited thereto. The converter 3 may be, for example, a single phase converter or may be a converter having phases more than three.

The converter 3 is equipped with reverse blocking-type switching units 31-36. Each of the reverse blocking-type switching units 31-33 is disposed between each of the AC lines Pr, Ps, and Pt and the DC line LH. The reverse blocking-type switching unit 31 has a diode Dr1 and a switching element Sr1; the reverse blocking-type switching unit 32 has a diode Ds1 and a switching element Ss1; and the reverse blocking-type switching unit 33 has a diode Dt1 and a switching element St1.

In each of the reverse blocking-type switching units 31-33, the diode Dx1 (hereinafter, x represents r, s, and t) and the switching element Sx1 are series-connected to each other between the AC line Px and the DC line LH. In the example in Fig. 1, the diode Dx1 is disposed on the DC line LH side with respect to the switching element Sx1. However, the diode Dx1 may be disposed on the AC line Px side with respect to the switching element Sx1. In particular, from the point of view that the potential of operation power supplied for the switching elements Sx1 is to be the potential of the DC line LH, it is preferable that the diodes Dx1 are disposed on the AC line Px side. The diodes Dx1 are arranged with the cathodes thereof directed to the DC line LH side so that the diodes Dx1 achieve a reverse blocking function for the reverse blocking-type switching units 31-33. That is to say, the diodes Dr1, Ds1, and Dt1 each prevent currents from flowing from the DC line LH to the AC lines Pr, Ps, and Pt though the reverse blocking-type switching units 31-33.

The switching element Sx1 is, for example, an insulated gate bipolar transistor or the like and is a switching element in which the direction from the DC line LL to the DC line LH is a forward direction.

Each of the reverse blocking-type switching units 34-36 is disposed between each of the AC lines Pr, Ps, and Pt and the DC line LL. The reverse blocking-type switching unit 34 has a diode Dr2 and a switching element Sr1; the reverse blocking-type switching unit 35 has a diode Ds2 and a switching element Ss2; and the reverse blocking-type switching unit 36 has a diode Dt2 and a switching element St2.

In each of the reverse blocking-type switching units 34-36, the diode Dx2 and the switching element Sx2 are series-connected to each other between the AC line Px and the DC line LL. In the example of Fig. 1, the diode Dx2 is disposed on the AC line Px side with respect to the switching element Sx2. However, the diode Dx2 may be disposed on the DC line LL side with respect to the switching element Sx2. The diodes Dx2 are arranged with the anodes thereof directed to the DC line LL side so that the diodes Dx2 achieve a reverse blocking function for the reverse blocking-type switching units 34-36. That is to say, the diodes Dr2, Ds2, and Dt2 each prevent current from flowing from the AC lines Pr, Ps, and Pt to the DC line LL through the reverse blocking-type switching units 34-36.

The switching element Sx2 is, for example, an insulated gate bipolar transistor or the like and is a switching element in which the direction from the DC line LL to the DC line LH is the forward direction.

The switching elements Sx1 and Sx2 are appropriately controlled depending on the AC voltage applied to the AC lines Px. With this arrangement, the converter 3 is able to convert the AC voltages applied to the AC lines Pr, Ps, and Pt into a DC voltage and apply the DC voltage between the DC lines LH and LL. Because such a control is a publicly known art, a detailed description will not be made.

Further, in the example in Fig. 1, the converter 3 is further equipped with diodes Dr3, Ds3, Dt3, Dr4, Ds4, and Dt4. The diodes Dx3 and Dx4 are disposed with the anodes thereof directed to the DC line LH side and each parallel-connected to each of the switching elements Sx1 and Sx2. These diodes Dx3 and Dx4 ideally do not contribute anything in a normal operation of the converter 3, which operation is, in other words, an operation of converting AC voltages into a DC voltage. However, the diodes Dx3 and Dx4 are able to control a trouble caused by, for example, a lightning strike or the like. This will be described in detail later.

In the example of Fig. 1, there is provided a filter 2 between the three-phase AC power supply 1 and the converter 3. For example, the filter 2 is equipped with reactors provided on each of the AC lines Pr, Ps, and Pt and capacitors provided between each of the AC lines Pr, Ps, and Pt. The capacitors are disposed between the reactors and the converter 3, and the capacitors are star-connected to each other in the example of Fig. 1. The filter 2 reduces high-frequency components, of the currents flowing through the AC lines Pr, Ps, and Pt, caused by switching of the converter 3, for example. With this arrangement, waveforms of the input currents can be smoothed. However, the filter 2 is not an essential component.

Further, in the example of Fig. 1, there is connected an inverter 4 in the subsequent stage of the converter 3. The inverter 4 is, for example, a three-phase inverter and converts the DC voltage between the DC lines LH and LL into AC voltages, and then applies the AC voltages to a load 5. The inverter 4 is equipped with three pairs of switching units series-connected to each other between the DC lines LH and LL, for the three phases. The connection points between the pair of switching units are connected to the load 5. The switching units each have a diode and a switching element parallel-connected to each other. The diodes are disposed with the anodes thereof directed to the DC line LH side. Then, the switching elements are appropriately controlled so that the inverter 4 is able to convert the DC voltage into an intended AC voltage. Because such a control is a publicly known art, a detailed description will not be made.

The load 5 is, for example, a motor, which is driven depending on the AC voltage applied from the inverter 4.

Note that, a device to which the converter 3 supplies the DC voltage may be not only an inverter but an arbitrary device.

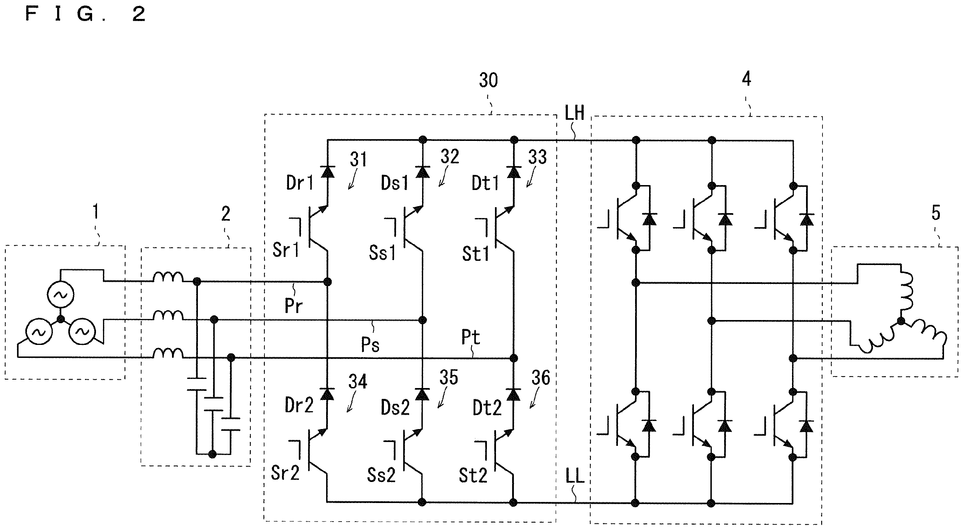

The following is a description on an advantage of the converter 3, based on a comparison with the conventional converter. As shown in Fig. 2, the conventional converter 30 does not have diodes Dx3 and Dx4. Also in the converter 30, the reverse blocking-type switching units 31-36 each have the diodes Dr1, Ds1, Dt1, Dr2, Ds2, and Dt2. Thus, even if a reverse voltage whose high potential is on the DC line LH side is applied to the reverse blocking-type switching units 31-36, most of the reverse voltage is supported by the diodes Dr1, Ds1, Dt1, Dr2, Ds2, and Dt2. Therefore, a reverse voltage applied to the switching elements Sr1, Ss1, St1, Sr2, Ss2, and St2 can be reduced.

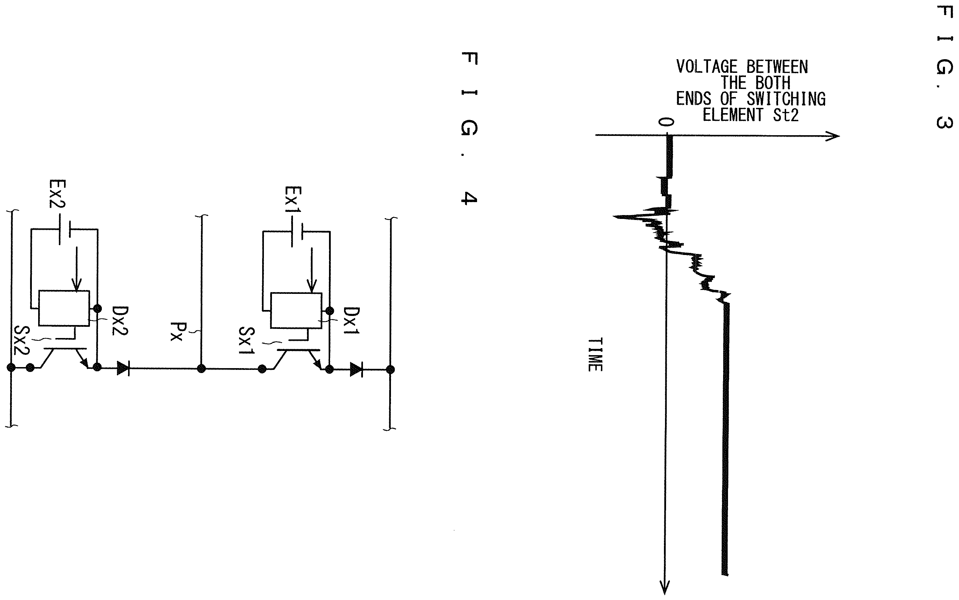

However, the following phenomenon is sometimes caused by, for example, a lightning strike or the like. That is to say, for example, even when a reverse voltage generated between the both ends of the reverse blocking-type switching unit 36 is not so high, a high reverse voltage is sometimes generated on the switching element St2 itself as shown in Fig. 3. Note that, in the example of Fig. 3, the reverse voltage is applied when the switching element St2 is conductive, and the switching element St2 is turned off after the reverse voltage is removed. However, the timings of turning on/off the switching element St2 and the timing of the reverse voltage are not limited to this example, and this example is just an example.

It has been revealed that the above mentioned reverse voltage is generated depending on, for example, a change in the operation power supplies for the switching elements Sx1 and Sx2. For this reason, the operation power supplies for switching elements Sx1 and Sx2 will be first described. As illustrated by an example in Fig. 4, the drive circuits Drx1 and Drx2 are connected to control terminals (gate terminals) of the switching elements Sx1 and Sx2, respectively. Operation power supplies Ex1 and Ex2 are connected to the drive circuits Drx1 and Drx2, respectively. The operation power supplies Ex1 and Ex2 are each a DC voltage source, an end on the low potential side of the operation power supply Ex1 is connected to an end (emitter terminal) on the DC line LH side of the switching element Sx1, and an end on the low potential side of the operation power supply Ex2 is connected to an end (emitter terminal) on the DC line LH side of the switching element Sx2. Each of the drive circuits Drx1 and Drx2 receives a switching signal, and applies the switching signal to each of the control terminals of the switching elements Sx1 and Sx2.

In the converter 3, the above-mentioned phenomenon is caused by a change in the operation power supplies Ex1 and Ex2 due to a lightning strike or the like. For example, increase in the low potential of the operation power supply Ex2 can increase the potential on one end on the DC line LH side of the switching element Sx2. The increase in the potential causes the reverse voltage in the switching element Sx2, but the increase does not change the voltage between the both ends of a pair of the switching element Sx2 and the diode Dx2 (that is, the reverse blocking-type switching unit 36).

As described above, in the case that the voltage between the both ends of a pair of the switching elements Sx2 and diode Dx2 is not changed, and the reverse voltage is caused in the switching element Sx2, the reverse voltage cannot be reduced by the diode Dx2.

On the other hand, in the converter 3 according to the present embodiment, the diodes Dx3 and Dx4 are antiparallel connected to the switching elements Sx1 and Sx2, respectively. Therefore, even if a reverse voltage is not applied to the reverse blocking-type switching unit and a reverse voltage is applied to the switching element Sx1 or Sx2 itself, the diode Dx3 of Dx4 conducts, thereby reducing the reverse voltage. This kind of idea cannot easily be made from the conventional art which sticks to reduction in the reverse voltage of the switching elements Sx1 and Sx2 by the diodes Dx1 and Dx2.

The currents flowing through the diodes Dx3 and Dx4 are generated based on the charge stored in the parasitic capacitance of the circuit and the like. Since the parasitic capacitance is smaller than the capacitance of the three-phase AC power supply 1, the currents flowing through the diodes Dx3 and Dx4 are smaller than the currents flowing through the diodes Dx1 and Dx2. For this reason, it is preferable that the current capacity of the diode Dx3 or the diode Dx4 is smaller than the current capacity of the diode Dx1 or the diode Dx2. This can reduce component cost and production cost.

On the other hand, it is preferable that the rated forward voltage of the diodes Dx3 and Dx4 are greater than those of the diodes Dx1 and Dx2. This is because the forward voltages momentarily applied on the diodes Dx3 and Dx4 can be higher than the forward voltages applied to the diodes Dx1 and Dx2.

Further, the converter 3 does not have to have all the diodes Dx3 and Dx4. At least one of the diodes Dr3, Ds3, Dt3, Dr4, Ds4, and Dt4 has only to be provided. That is because the reverse voltage on the switching element which is parallel-connected to this diode can be prevented, and this is effective.

Further, as an idea of the conventional art, it can be thought that a publicly known surge absorption circuit is provided. For example, at least one stage or more of a publicly known surge absorption circuit for absorbing a surge voltage is provided on the input side of the converter 3 to absorb a surge voltage on the converter 3. However, this kind of measure increases a circuit scale and does not necessarily reduce the reverse voltage on the switching element.

The present invention has been described in detail; however the above description is just an example in all aspects, and the present invention is not limited thereto. Countless modified examples which have not illustrated by an example can be thought without departing from the scope of the present invention.

### Description of Reference Signs

3: Converter
31-36: Reverse blocking-type switching unit
Dr1, Ds1, Dt1, Dr2, Ds2, Dt2, Dr3, Ds3, Dt3, Dr4, Ds4, Dt4; Diode
LH, LL: DC line
Pr, Ps, Pt: AC line
Sr1, Ss1, St1, Sr2, Ss2, St2: Switching element

## Claims

1. a power conversion device comprising:
an AC line (Pr, Ps, Pt);
first and second DC lines (LL, LH);
a first reverse blocking-type switching unit (31-33), said first reverse blocking-type switching unit (31-33) including:
a first diode (Dr1, Ds1, Dt1) and a first switching element (Sr1, Ss1, St1) which are series-connected to each other between said AC line (Pr, Ps, Pt) and said first DC line (LL), wherein said first diode (Dr1, Ds1, Dt1) is disposed with a cathode thereof directed to said first DC line side;
a second reverse blocking-type switching unit (34-36), said second reverse blocking-type switching unit (34-36) including:
a second diode (Dr2, Ds2, Dt2) and a second switching element (Sr2, Ss2, St2) which are series-connected to each other between said AC line (Pr, Ps, Pt) and said second DC line (LL), wherein said second diode (Dr2, Ds2, Dt2) is disposed with an anode thereof directed to said second DC line side;
**characterized by**
at least one third diode (Dr3, Ds3, Dt3), said at least one third diode (Dr3, Ds3, Dt3) including:
an anode on said first DC line side and a cathode on said serial AC line (Pr, Ps, Pt), wherein said at least one third diode (Dr3, Ds3, Dt3) is antiparallel-connected to at least any one of said first switching element (Sr1, Ss1, St1).

2. The power conversion device according to claim 1, comprising
at least one fourth diode (Dr4, Ds4, Dt4), said at least one fourth diode (Dr4, Ds4, Dt4) including:
an anode on said AC line (Pr, Ps, Pt) and a cathode on said second DC line side, wherein said at least one fourth diode (Dr4, Ds4, Dt4) is antiparallel-connected to at least one of said second switching elements (Sr2, Ss2, St2).

3. The power conversion device according to claim 1 or 2, wherein a current capacity of said at least one third and fourth diode (Dr3, Ds3, Dt3, Dr4, Ds4, Dt4) is smaller than a current capacity of said first and second diodes (Dr1, Ds1, Dt1, Dr2, Ds2, Dt2).

## Patentansprüche

1. Leistungswandler, umfassend:
eine Wechselstromleitung (Pr, Ps, Pt);
erste und zweite Gleichstromleitungen (LL, LH);
eine erste Umkehrsperrschaltereinheit (31-33), wobei die erste Umkehrsperrschaltereinheit (31-33) beinhaltet:
eine erste Diode (Dr1, Ds1, Dt1) und ein erstes Schaltelement (Sr1, Ss1, St1), die zu einander zwischen der Wechselstromleitung (Pr, Ps, Pt) und der ersten Gleichstromleitung (LL) in Reihe geschaltet sind, wobei die erste Diode (Dr1, Ds1, Dt1) mit einer Kathode derselben hin zu der Seite der ersten Gleichstromleitung gerichtet angeordnet ist;
eine zweite Umkehrsperrschaltereinheit (34-36), wobei die zweite Umkehrsperrschaltereinheit (34-36) beinhaltet:
eine zweite Diode (Dr2, Ds2, Dt2) und ein zweites Schaltelement (Sr2, Ss2, St2), die zu einander zwischen der Wechselstromleitung (Pr, Ps, Pt) und der zweiten Gleichstromleitung (LL) in Reihe geschaltet sind, wobei die zweite Diode (Dr2, Ds2, Dt2) mit einer Anode derselben hin zu der Seite der zweiten Gleichstromleitung gerichtet angeordnet ist;
**gekennzeichnet durch**
mindestens eine dritte Diode (Dr3, Ds3, Dt3), wobei die mindestens eine dritte Diode (Dr3, Ds3, Dt3) beinhaltet:
eine Anode auf der Seite der ersten Gleichstromleitung und eine Kathode auf der seriellen Wechselstromleitung (Pr, Ps, Pt), wobei die mindestens eine dritte Diode (Dr3, Ds3, Dt3) mit mindestens irgendeinem des ersten Schaltelements (Sr1, Ss1, St1) antiparallel verbunden ist.

2. Leistungswandler nach Anspruch 1, umfassend
mindestens eine vierte Diode (Dr4, Ds4, Dt4), wobei die mindestens eine vierte Diode (Dr4, Ds4, Dt4) beinhaltet:
eine Anode auf der Wechselstromleitung (Pr, Ps, Pt) und eine Kathode auf der Seite der zweiten Gleichstromleitung, wobei die mindestens eine vierte Diode (Dr4, Ds4, Dt4) mit mindestens einem des zweiten Schaltelements (Sr2, Ss2, St2) antiparallel verbunden ist.

3. Leistungswandler nach Anspruch 1 oder 2, wobei eine Stromkapazität der mindestens einen dritten und vierten Diode (Dr3, Ds3, Dt3, Dr4, Ds4, Dt4) kleiner ist als eine Stromkapazität der ersten und zweiten Dioden (Dr1, Ds1, Dt1, Dr2, Ds2, Dt2).

## Revendications

1. Dispositif de conversion de puissance comprenant :
une ligne à courant alternatif (Pr, Ps, Pt) ;
des première et seconde lignes à courant continu (LL, LH) ;
une première unité de commutation de type à blocage inverse (31-33), ladite première unité de commutation de type à blocage inverse (31-33) comportant :
une première diode (Dr1, Ds1, Dt1) et un premier élément de commutation (Sr1, Ss1, St1) qui sont connectés mutuellement en série entre ladite ligne à courant alternatif (Pr, Ps, Pt) et ladite première ligne à courant continu (LL), dans lequel ladite première diode (Dr1, Ds1, Dt1) est disposée avec une cathode de celle-ci orientée vers le côté de ladite première ligne à courant continu ;
une seconde unité de commutation de type à blocage inverse (34-36), ladite seconde unité de commutation de type à blocage inverse (34-36) comportant :
une deuxième diode (Dr2, Ds2, Dt2) et un second élément de commutation (Sr2, Ss2, St2) qui sont connectés mutuellement en série entre ladite ligne à courant alternatif (Pr, Ps, Pt) et ladite seconde ligne à courant continu (LL), dans lequel ladite deuxième diode (Dr2, Ds2, Dt2) est disposée avec une anode de celle-ci orientée vers le côté de ladite seconde ligne à courant continu ;
**caractérisé par**
au moins une troisième diode (Dr3, Ds3, Dt3), ladite au moins une troisième diode (Dr3, Ds3, Dt3) comportant :
une anode sur le côté de ladite première ligne à courant continu et une cathode sur ladite ligne à courant alternatif (Pr, Ps, Pt) en série, dans lequel ladite au moins une troisième diode (Dr3, Ds3, Dt3) est connectée de manière antiparallèle à au moins l'un quelconque desdits premiers éléments de commutation (Sr1, Ss1, St1).

2. Dispositif de conversion de puissance selon la revendication 1, comprenant
au moins une quatrième diode (Dr4, Ds4, Dt4), ladite au moins une quatrième diode (Dr4, Ds4, Dt4) comportant :
une anode sur ladite ligne à courant alternatif (Pr, Ps, Pt) et une cathode sur le côté de ladite seconde ligne à courant continu, dans lequel ladite au moins une quatrième diode (Dr4, Ds4, Dt4) est connectée de manière antiparallèle à au moins l'un desdits seconds éléments de commutation (Sr2, Ss2, St2).

3. Dispositif de conversion de puissance selon la revendication 1 ou 2, dans lequel une capacité de courant de ladite au moins une troisième et quatrième diode (Dr3, Ds3, Dt3, Dr4, Ds4, Dt4) est plus petite qu'une capacité de courant desdites première et deuxième diodes (Dr1, Ds1, Dt1, Dr2, Ds2, Dt2).
